# EUROPÄISCHE PATENTSCHRIFT

(11) **EP 0 591 720 B1**
(45) Veröffentlichungstag und Bekanntmachung des Hinweises auf die Patenterteilung: **11.06.1997**
(21) Anmeldenummer: 93114792.0
(22) Anmeldetag: 15.09.1993
(51) Int. Cl.: B62D 21/02, B62D 43/04

(54) **Nutzfahrzeug, insbesondere Frontlenker-Lastkraftwagen**
Commercial vehicle, especially cab over lorry engine
Véhicule utilitaire, notamment camion à cabine avancée

(30) Priorität: 09.10.1992 DE 4234110
(43) Veröffentlichungstag der Anmeldung: 13.04.1994
(73) Patentinhaber: MAN Nutzfahrzeuge Aktiengesellschaft, 80976 München (DE)
(72) Erfinder: Rieck, Gerhard, Dipl.-Ing., D-81247 München (DE); Mertens, Armin, D-80993 München (DE); Schmolly, Ingo, Dipl.-Ing. (FH), D-85757 Karlsfeld (DE)

(56) Entgegenhaltungen:
- BE-A- 390 022
- DE-A- 3 151 280
- DE-A- 3 312 446
- FR-A- 328 448
- FR-A- 659 850
- FR-A- 2 214 281
- FR-A- 2 667 839
- US-A- 4 418 852

## Beschreibung

Die Erfindung betrifft einen Lastkraftwagen, insbesondere der Frontlenker-Bauart, mit Merkmalen der im Oberbegriff des Anspruches 1 angegebenen Art.

Aus der FR-A-22 14 281 ist eine Fahrgestellkonstruktion eines Anhängers bekannt, mit zwei jeweils von vorn nach hinten durchgehenden Rahmen-Längsträgern. Im mittleren Abschnitt zwischen den Achsen ist jeder derselben durch einen Querdurchbruch in ein unteres und ein oberes Längsträger-Teil abgelöst. Der Durchbruch ist so groß ausgebildet und mit einer unteren Plattform ausgestattet, daß Ersatzräder quer eingelagert werden können. Eine solche, beide Rahmen-Längsträger quer überbrückende untere Plattform wie bei diesem Anhänger kann bei Lastkraftwagen nicht angewandt werden, weil solches den zweckmäßigen Anbau und die Unterbringung von Fahrzeugaggregaten und insbesondere auch des Triebstranges zu der/den Hinterachse(n) behindern würde.

Demgegenüber geht die Erfindung aus von Lastkraftwagen herkömmlicher Bauart, also Frontlenker- oder Hauber-Lastkraftwagen, die mit ihrem Fahrgestell einschließlich Fahrerhaus und unter bzw. vor diesem angeordneten Antriebsaggregat die Basis für ein Nutzfahrzeug bilden. Solche Frontlenker- oder Hauber-Lastkraftwagen weisen ein Fahrgestell auf, dessen Rahmen aus zwei mit ihrer Oberkante in einer horizontalen Ebene liegenden Längsträgern besteht, die über mehrere Querträger verbunden sind. Dabei haben die Rahmen-Längsträger eine Querschnitts-Höhe, die je nach zulässigem Gesamtgewicht des Nutzfahrzeuges bis zu 400 mm betragen kann. Bedingt dadurch ist für die Herstellung dieser Rahmen-Längsträger relativ viel Material notwendig. Außerdem tragen diese in der Regel aus einteiligen Blechpreßteilen bestehenden Rahmen-Längsträger in ganz erheblichem Maße zum Leergewicht des Nutzfahrzeuges bei. Aufgrund der Festigkeit des Materiales, des Querschnittes der Rahmen-Längsträger und der diese verbindenden Querträger ergibt sich eine bestimmte Biegesteifigkeit des Rahmens. Eine erforderliche Rahmen-Biegesteifigkeit kann daher nur durch eine entsprechende Auslegung dieser Komponenten erzielt werden. Darüber hinaus ist es oft schwierig, je nach Einsatz- bzw. Verwendungszweck des Nutzfahrzeuges, das Ersatzrad unterzubringen. Hierbei werden oft Kompromisse eingegangen hinsichtlich der Lage des Ersatzrades und anderer, zum Teil zu verlagernder Fahrzeugteile.

Es ist daher Aufgabe der Erfindung, bei einem Lastkraftwagen der gattungsgemäßen Art dessen Rahmen dahingehend abzuändern, daß dessen erforderliche Biegesteifigkeit mit geringerem Gewicht und Materialeinsatz auch im Hinblick auf eine günstige Anordnung des Ersatzrades realisierbar ist.

Diese Aufgabe ist erfindungsgemäß bei einem Lastkraftwagen der gattungsgemäßen Art durch die im Kennzeichen des Anspruchs 1 angegebene Rahmen-Konstruktion gelöst.

Vorteilhafte Ausgestaltungen dieser Lösung sind in den Unteransprüchen angegeben.

Bedingt durch die erfindungsgemäße Auflösung jedes der beiden Rahmen-Längsträger in ein oberes und ein unteres Längsträger-Teil ist somit in Verbindung mit den jeweiligen Querträgern ein Rahmenmittelabschnitt darstellbar, mit dem Ergebnis einer sehr hohen Biegesteifigkeit bei gleichzeitig geringerem Gewicht und geringerem Materialeinsatz als bei bekannten Rahmen-Konstruktionen. Die erfindungsgemäße Längsträgeraufteilung kommt aber nur in jenem Bereich des Nutzfahrzeuges zur Anwendung, der naturgemäß wegen der An- und Aufbauten und Beladung am stärksten belastet ist. Rahmenbereiche hinter der/den Hinterachse(n) und vor dem Auflösungsbereich unter dem Fahrerhaus erfordern regelmäßig keine solch hohe Biegesteifigkeit und können daher ebenfalls entsprechend leichter, mit weniger Materialeinsatz und konstruktiv günstiger gestaltet werden. Bedingt dadurch, daß das untere Teil eines der beiden Rahmen-Längsträger erfindungsgemäß soweit nach unten verlegt ist, daß zwischen diesem und dem zugehörigen oberen Längsträger-Teil das Ersatzrad quer einbaubar ist, ist für letzteres eine äußerst günstige, auch geschützte Unterbringung gewährleistet. Die Anordnung anderer Fahrzeugteile wie Kraftstoffbehälter, Druckluftbehälter, Batteriekästen, Staukästen und dergleichen wird nicht behindert, im Gegenteil ergibt sich für solche Fahrzeugkomponenten wegen der erfindungsgemäßen Rahmenkonstruktion ebenfalls eine günstigere Unterbringung als bei bekannten Fahrzeugen.

Nachstehend ist die erfindungsgemäße Lösung anhand mehrerer in der Zeichnung dargestellter Ausführungsbeispiele noch näher erläutert. In der Zeichnung zeigen:
- Fig. 1 und 2: jeweils in schematisierter Seitenansicht ein Nutzfahrzeug der Frontlenker-Bauart (ohne Auf- und Anbauten) mit einer Ausführungsform der erfindungsgemäßen Rahmen-Konstruktion,
- Fig. 3: einen schematisierten Querschnitt durch das Nutzfahrzeug im Bereich der erfindungsgemäßen Lösung, und
- Fig. 4 bis 7: je eine Ausführungsform der Querträgerverbindungen zwischen den beiden erfindungsgemäß in zwei Teile aufgelösten Längsträger-Abschnitten.

In den Figuren sind gleiche bzw. einander entsprechende Bauteile mit gleichen Bezugszeichen angezogen.

Bei dem Lastkraftwagen kann es sich um einen Lastkraftwagen jeglicher Bau- und Einsatzart handeln. Die Basis bildet somit ein Lastkraftwagen der Frontlenker- oder Hauber-Bauart, auf dessen Fahrgestell je nach Einsatzzweck die entsprechenden Auf- und oder Anbauten angebracht sind.

Das Nutzfahrzeug weist ein Fahrgestell auf, dessen Rahmen 1 aus zwei bauartgleichen, über Querträger miteinander verbundenen Längsträgern 2, 3 besteht. Vom Rahmen 1 werden in dessen vorderem Bereich ein Antriebsaggregat 4 - eingebaut zwischen beiden Längsträgern 2, 3 und ein Fahrerhaus 5 - letzteres über Lagerböcke 6, 7 - getragen.

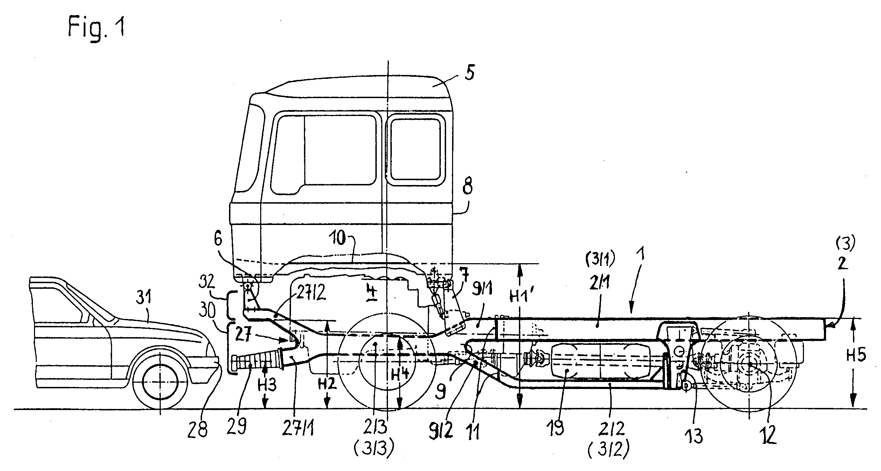

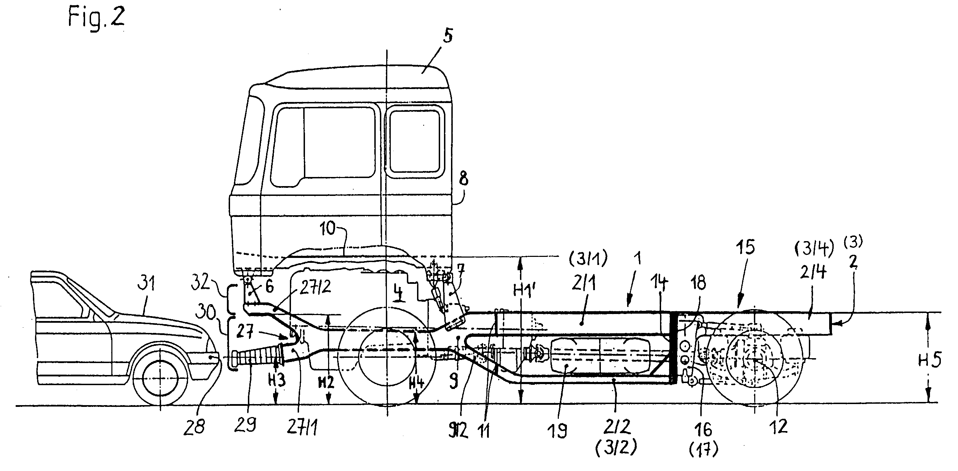

Dem erfindungsgemäßen Rahmen-Konzept entsprechend ist jeder der beiden Rahmen-Längsträger 2, 3 etwa ab der Fahrerhaus-Rückwand 8 in ein oberes Längsträger-Teil 2/1, 3/1 und ein unteres Längsträger-Teil 2/2, 3/2 aufgelöst, die vor der (ersten, vorderen) Hinterachse 12 wieder miteinander verbunden sind. Bei den dargestellten Ausführungsformen weist dabei jeder der beiden Rahmen-Längsträger 2, 3 am hinteren Ende eines vorderen Träger-Abschnittes 2/3 bzw. 3/3 eine Vertikal-Gabelung 9 mit oberem Gabel-Teil 9/1, an dem sich das obere Längsträger-Teil 2/1 bzw. 3/1 anschließt, und unterem Gabel-Teil 9/2, an dem sich das untere Längsträger-Teil 2/2 bzw. 3/2 anschließt, auf. Der vordere Längsträger-Abschnitt 2/3 bzw. 3/3 jedes Längsträgers 2, 3 ist dabei um ein gewisses Maß zumindest partiell abgesenkt, um eine Tieferlegung des Antriebsaggregates 4 und gegebenenfalls auch des Fahrerhauses 5 zu ermöglichen. Zum Vergleich: Das Maß des Abstandes zwischen Fahrbahn und Oberkante oberes Längsträger-Teil 2/1 bzw. 3/1 ist in der Zeichnung mit H5 angegeben. Demgegenüber ist das Maß zwischen Fahrbahn und Oberkante desabgesenkten vorderen Träger-Abschnittes 2/3 bzw. 3/3, welches in den Fig. 1 und 2 mit H4 angegeben ist, kleiner und beträgt etwa 0,6 - 0,9 H5. Das Maß zwischen Fahrbahn und Boden 10 des tiefer gelegten Fahrerhauses 5 ist in den Fig. 1 und 2 mit H1' angegeben. Im übrigen können die vorderen abgesenkten Längsträger-Abschnitte 2/3, 3/3 zur Bildung eines etwa V-förmigen Einbaubereiches für das Antriebsaggregat 4 auch in sich von der Vertikalen abweichend schräg gestellt sowie zum direkten Anschluß von Achs- bzw. Einzelradaufhängungsorganen mit entsprechenden Aus- und Einbuchtungen versehen sein.

Die beiden Teile 2/1, 2/2 bzw. 3/1, 3/2 jedes Rahmen-Längsträgers 2, 3 sind mit größerem Abstand übereinander und in Längsrichtung im wesentlichen parallel verlaufend angeordnet sowie jeweils mit dem zugehörigen Gabel-Teil 9/1 bzw. 9/2 über Schraub- oder Nietverbindungen verbunden. Die jeweiligen Schnitt- bzw. Anschlußstellen sind in der Zeichnung mit 11 angezogen. Dies hat den Vorteil, daß das Fahrzeug in zwei Modulen vormontierbar ist, nämlich einem Modul mit Fahrgestell-Vorderteil, Antriebsaggregat 4 und Fahrerhaus 5, sowie einem Modul mit Fahrgestell-Hinterteil mit Kraftstoff- und Druckluftbehältern und dergleichen Komponenten sowie Hinterachse(n) 12.

Das obere Teil 2/1, 3/1 jedes Rahmen-Längsträgers 2, 3 kann sich, wie beim Ausführungsbeispiel gemäß Fig. 1, über die Hinterachsanordnung hinaus bis zum Rahmenende erstrecken. Das untere Längsträger-Teil 2/2, 3/2 endet dagegen jeweils vor der (ersten, vorderen) Hinterachse 12 und ist dort über einen Lagerschild 13, an dem Hinterachsaufhängungsorgane angelenkt sind, mit dem zugehörigen oberen Längsträger-Teil 2/1, 3/1 verbunden.

Alternativ hierzu können - wie aus Fig. 2 ersichtlich - jedoch auch beide Teile 2/1, 2/2 bzw. 3/1, 3/2 jedes Rahmen-Längsträgers 2, 3 nach hinten nur bis vor die (erste, vordere) Hinterachse 12 reichen und dort beispielsweise über eine Vertikal-Traverse 14 miteinander verbunden sein. In diesem Fall ist der Rahmen nach hinten durch sich an den oberen Längsträger-Teilen 2/1, 3/1 in deren Höhe anschließende, durch wenigstens einen Querträger verbundene Längsträger-Teile 2/4 bzw. 3/4 ergänzt. Diese Ausführungsvariante macht es möglich, daß das Fahrgestell-Heck 15 als Modul, bestehend aus Rahmen-Endstück mit Hinterachse(n) 12 und sonstigen Anbauteilen vormontierbar und dann am davor gegebenen Rahmenabschnitt befestigbar ist. Für die Anlenkung von Hinterachsaufhängungsorganen sind dabei außen an den Längsträger-Teilen 2/4, 3/4 jeweils Lagerschilde 16, 17 vorgesehen. Frontseitig der letzteren und verbunden mit diesen ist beispielsweise eine Anschlußplatte 18 gegeben, die bei der Montage desvormontierten Fahrgestell-Hecks 15 an der Vertikaltraverse 14 zur Anlage kommt.

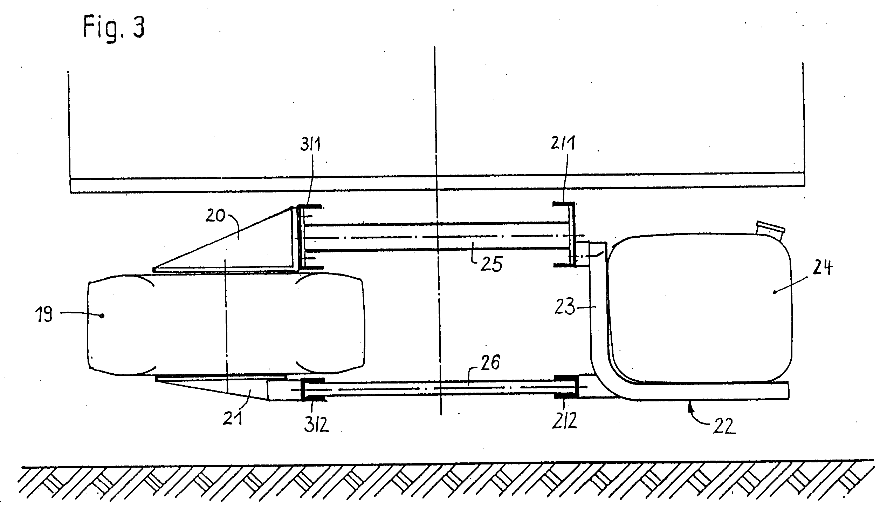

Gemäß einem weiteren erfindungsgemäßen Merkmal ist das untere Teil 2/2 bzw. 3/2 eines der beiden Rahmen-Längsträger 2, 3 soweit nach unten verlegt, daß zwischen diesem und dem zugehörigen oberen Längsträger-Teil 2/1 bzw. 3/1 ein Ersatzrad 19 quer einbaubar ist. Dieses wird (siehe Fig. 3) von wenigstens einer außen an einem der Längsträger-Teile angeflanschten, seitlich abragenden Konsole 20 bzw. 21 getragen, die mit einem Schlitten zum Querein- und -ausschieben sowie das Heben und Absenken bzw. Montieren und Demontieren des Ersatzrades 19 unterstützenden Mechanismen, wie Hub-, Absenk- und Schwenkorganen, ausgestattet sein kann.

Wie aus Fig. 3 ebenfalls ersichtlich, sind an den beiden Teilen 2/1, 2/2 bzw. 3/1, 3/2 des gegenüberliegenden Rahmen-Längsträgers 2 außen Winkelhalter 22 mit ihren Vertikal-Schenkeln 23 sehr günstig abgestützt angebracht, vorzugsweise angeschraubt, die als Träger für Fahrzeugteile 24 wie einen oder mehrere Kraftstoff- und/oder Druckluftbehälter, Staukästen, Batteriekästen und dergleichen, dienen.

Zur Erhöhung der Biegesteifigkeit können die beiden Teile 2/1, 2/2 bzw. 3/1, 3/2 der Rahmen-Längsträger 2,3 im Bereich zwischen vorderem und hinterem Ende auch noch durch wenigstens eine Strebe miteinander verbunden sein.

Unabhängig von ihrer jeweiligen Anordnung können die beiden Teile 2/1, 2/2 bzw. 3/1, 3/2 jedes Rahmen-Längsträgers 2, 3 entweder einen gleichen Querschnitt oder unterschiedliche Querschnitte aufweisen, wobei das querschnittsstärkere wahlweise das untere oder obere sein kann.

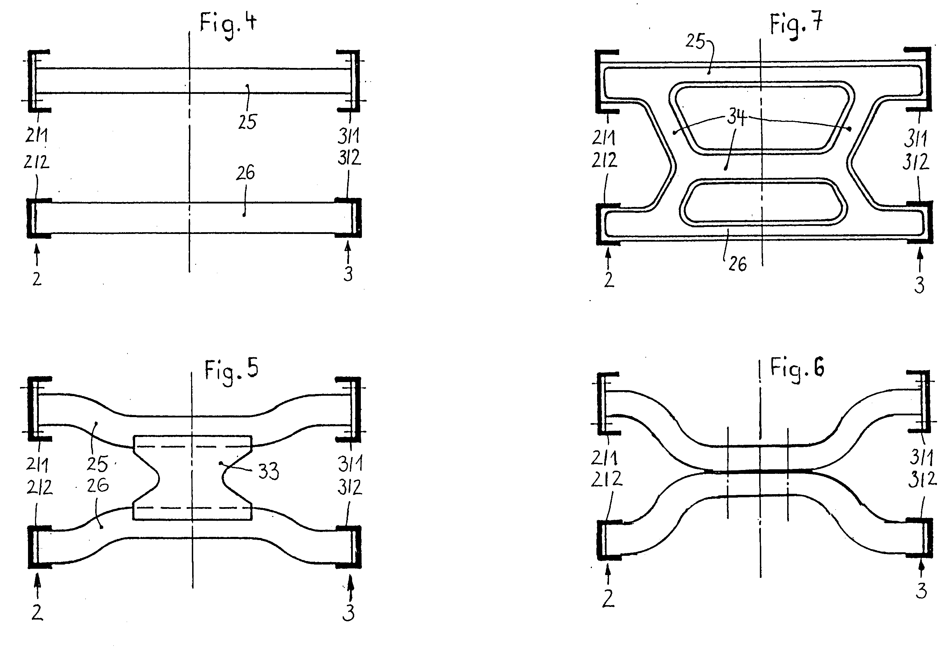

Die beiden Längsträger 2, 3 sind generell über an geeigneten Stellen angebrachte Querträger miteinander verbunden. In jenem Bereich, in dem die Längsträger 2, 3 in jeweils zwei Teile aufgelöst sind, können zur Verbindung der jeweils oberen Längsträger-Teile 2/1, 3/1 und unteren Längsträger-Teile 2/2, 3/2 gerade (wie aus Fig. 3 und 4 ersichtlich) oder gekröpfte, gegebenenfalls endseitig mit Anschlußflanschen bestückte Querträger 25, 26 vorgesehen sein, die nicht (siehe Fig. 3 und 4) oder über ein Zwischenstück 33 (siehe Fig. 5) oder mittig aneinander anliegend direkt (siehe Fig. 6) oder über Verstrebungen 34 (siehe Fig. 7) miteinander verbunden sein können und an denen die besagten Längsträger-Teile jeweils endseitig angeschraubt, angenietet oder angeschweißt sind.

Unabhängig von der Gestaltung des Fahrgestells im hinteren Bereich kann jeder der Rahmen-Längsträger 2, 3 an seinem vorderen Endbereich eine Vertikal-Gabelung 27 aufweisen (siehe Fig. 1 und 2), an deren unterem Gabel-Teil 27/1 vorne über einen oder mehrere in Höhe H3 einer Pkw-Stoßstange 28 angeordnete(n) Energieabsorber 29 ein Stoßfänger 30 abgestützt sein. Das obere Gabel-Teil 27/2 dagegen endet in einer etwas über dem Normal-Niveau einer Pkw-Motorhaube 31 gegebenen Höhe H2 und ist untenseitig so gestaltet, daß ein Pkw bei einer Frontalkollision in diese so gegebene, im übrigen bauteilfreie oder bauteilarme und dann nur mit längsweich (in Längsrichtung nachgiebig) am Rahmen befestigten Bauteilen bzw. Aggregaten ausgestattete Nutzfahrzeug-Knautschzone eindringen kann, wobei durch den/die in Rahmen-Längsrichtung nachgiebigen Energieabsorber 29 die Energie verzehrbar ist.

## Patentansprüche

1. Lastkraftwagen, insbesondere der Frontlenker-Bauart, mit einem Fahrgestell, dessen Rahmen (1) aus zwei über Querträger (25, 26) verbundenen Längsträgern (2, 3) besteht, ein Fahrerhaus (5) sowie ein Antriebsaggregat (4) trägt, mit wenigstens einer Vorderachse und einer Hinterachse (12) verbunden ist sowie Vorkehrungen zur Unterbringung und Befestigung eines Ersatzrades (19) aufweist, dadurch gekennzeichnet, daß jeder der beiden Rahmen-Längsträger (2, 3)
- etwa ab der Fahrerhaus-Rückwand (8) in ein separates oberes Längsträger-Teil (2/1, 3/1) und ein separates unteres Längsträger-Teil (2/2, 3/2) aufgelöst ist und
- am hinteren Ende eines separaten vorderen Längsträger-Abschnittes (2/3 bzw. 3/3) eine Vertikalgabelung (9) aufweist, an deren oberem Gabelteil (9/1) sich das obere Längsträger-Teil (2/1 bzw. 3/1) und an deren unterem Gabelteil (9/2) sich das untere Längsträger-Teil (2/2 bzw. 3/2) des aufgelösten Längsträger-Abschnitts anschließt und mit dem zugehörigen Gabelteil (9/1 bzw. 9/2) der Vertikalgabelung (9) über Schraub- oder Nietverbindungen verbunden ist,
daß ferner das untere Längsträger-Teil (2/2 bzw. 3/2) im aufgelösten Längsträger-Abschnitt
a) nur bis vor die (erste, vordere) Hinterachse (12) reicht und dort über ein endseitiges, sich im wesentlichen vertikal erstreckendes Verbindungsorgan (13, 14) mit dem darüber angeordneten oberen Längsträger-Teil (2/1 bzw. 3/1) verbunden ist, und
b) in einer Vertikalebene mit dem oberen Längsträger-Teil (2/1 bzw. 3/1) soweit von letzterem beabstandet nach unten verlegt ist, daß dort zwischen den beiden Längsträger-Teilen (2/1, 2/2 bzw. 3/1, 3/2) ein Ersatzrad (19) quer einbaubar ist, und c) zumindest im Bereich der Unterbringung des Ersatzrades (19) parallel verlaufend zum oberen Längsträger-Teil (2/1 bzw. 3/1) angeordnet ist,
daß das vertikale Verbindungsorgan (13, 14) auch als Anschlußorgan für ein Rahmen-/Fahrgestell-Hinterteil (15) oder Teile desselben dienend ausgebildet ist, und
daß das Ersatzrad (19) von wenigstens einer Konsole (20 bzw. 21) getragen ist, die
- an einem der Längsträger-Teile (2/1, 2/2 bzw. 3/1, 3/2) seitlich abstehend befestigt ist und
- mit das Montieren und Demontieren des Ersatzrades (19) erleichternden Einrichtungen, wie einem Schlitten zum Querein- und -ausschieben, Hub-,Absenk-, Schwenkorganen, ausgestattet ist.

2. Lastkraftwagen nach Anspruch 1, dadurch gekennzeichnet, daß die Gabelung (9) am hinteren Ende eines vorderen Längsträger-Abschnitts (2/3 bzw. 3/3) gegeben ist, der im Bereich unterhalb des Fahrerhauses (5) und des Antriebsaggregates (4) auf ein gegenüber dem Höhenniveau (H5) des oberen Längsträger-Teils (2/1 bzw. 3/1) niedrigeres Höhenniveau (H4) von ca. 0,6 bis 0,9 H5 abgesenkt ist.

3. Lastkraftwagen nach einem oder mehreren der vorhergehenden Ansprüche, dadurch gekennzeichnet, daß sich beide Teile (2/1, 2/2 bzw. 3/1, 3/2) jedes Rahmen-Längsträgers (2, 3) nach hinten nur bis vor die (erste, vordere) Hinterachse (12) erstrecken und dort über ein solches Verbindungsorgan (14) miteinander verbunden sind, an dem sich ein Rahmen-/Fahrgestell-Hinterteil anschließend befestigt ist.

4. Lastkraftwagen nach einem oder mehreren der Ansprüche 1 bis 3, dadurch gekennzeichnet, daß das obere Teil (2/1, 3/1) jedes Rahmen-Längsträgers (2, 3) sich über die Hinterachsanordnung hinaus erstreckt und das untere, vor der (ersten, vorderen) Hinterachse (12) endende Längsträger-Teil (2/2, 3/2) mit dem oberen Längsträger-Teil (2/1, 3/1) über ein einen Lagerschild (13) bildendes Verbindungsorgan verbunden ist, an dem innerhalb des Fahrgestell-Hinterteils gegebene Hinterachsaufhängungsorgane angelenkt sind.

5. Lastkraftwagen nach einem oder mehreren der Ansprüche 1 bis 4, dadurch gekennzeichnet, daß die beiden Teile (2/1, 2/2 bzw. 3/1, 3/2) eines Rahmen-Längsträgers (2, 3) im Überdeckungsbereich auch noch durch wenigstens eine versteifende Strebe miteinander verbunden sind.

## Claims

1. A lorry, in particular of the cab-over-engine type, having a chassis, the frame (1) of which comprises two longitudinal beams (2, 3) connected by transverse beams (25, 26), supports a driver's cab (5) and a drive unit (4), is connected to at least one front axle and one rear axle (12) and has means for accommodating and fixing a spare wheel (19), characterised in that each of the two longitudinal beams (2, 3) of the frame
- is divided into a separate upper longitudinal beam member (2/1, 3/1) and a separate lower longitudinal beam member (2/2, 3/2) extending substantially from the rear wall (8) of the cab, and
- has a vertical forking (9) at the rear end of a separate front longitudinal beam portion (2/3, 3/3), the upper longitudinal beam member (2/1, 3/1) being connected to the upper fork part (9/1) of the vertical forking (9) and the lower longitudinal beam member (2/2, 3/2) of the divided longitudinal beam portion being connected to the lower fork part (9/2) of the vertical forking (9), the connection to the associated fork part (9/1, 9/2) of the vertical forking (9) being by means of bolted or riveted connections,
furthermore in that the lower longitudinal beam member (2/2, 3/2) in the divided longitudinal beam portion
a) only extends as far as the (first, front) rear axle (12), where it is connected to the upper longitudinal beam member (2/1, 3/1) arranged thereabove by means of a substantially vertically extending connecting member (13, 14) provided at the end, and
b) is displaced downwards in a vertical plane away from the upper longitudinal beam member (2/1, 3/1) so that a spare wheel (19) is insertable transversely between the two longitudinal beam members (2/1, 2/2 or 3/1, 3/2), and
c) is arranged parallel to the upper longitudinal beam member (2/1, 3/1) at least in the region in which the spare wheel (19) is accommodated,
in that the vertical connecting member (13, 14) is also formed as a coupling member for a frame/chassis rear part (15) or parts thereof, and
in that the spare wheel (19) is supported by at least one bracket (20, 21) which
- is fixed to one of the longitudinal beam members (2/1, 2/2 or 3/1, 3/2) so as to project laterally therefrom, and
- is provided with apparatus for facilitating the mounting and removal of the spare wheel (19), such as a slide for sliding the spare wheel transversely in and out, lifting, lowering and tilting devices.

2. A lorry according to claim 1, characterised in that the forking (9) is provided at the rear end of a front longitudinal beam portion (2/3, 3/3) which, in the region below the cab (5) and the drive unit (4), is lowered to a height level (H4) lower in relation to the height level (H5) of the upper longitudinal beam member (2/1, 3/1) and approximately 0.6 to 0.9 H5.

3. A lorry according to one or more of the preceding claims, characterised in that both members (2/1, 2/2 and 3/1, 3/2) of each longitudinal beam (2, 3) of the frame extend rearwards only as far as the (first, front) rear axle (12), where they are interconnected by a connecting member (14) to which a frame/chassis rear part is subsequently fixed.

4. A lorry according to one or more of claims 1 to 3, characterised in that the upper member (2/1, 3/1) of each longitudinal beam (2, 3) of the frame extends beyond the rear axle arrangement, and the lower longitudinal beam member (2/2, 3/2), ending upstream of the (first, front) rear axle (12), is connected to the upper longitudinal beam member (2/1, 3/1) by a connecting member forming a bearing plate (13) on which are articulated rear axle suspension components provided within the rear part of the chassis.

5. A lorry according to one or more of claims 1 to 4, characterised in that the two members (2/1, 2/2 and 3/1, 3/2) of a longitudinal beam (2, 3) of the frame are also interconnected in the divided region thereof by at least one bracing strut.

## Revendications

1. Camion notamment à cabine avancée comprenant un châssis dont le cadre (1) se compose de deux longerons (2, 3) reliés par les traverses (25, 26), d'une cabine de conduite (5) ainsi que d'un groupe d'entraînement (4), et ayant au moins un essieu avant et un essieu arrière (12), et des moyens pour loger et fixer une roue de secours (19),
caractérisé en ce que
chacun des deux longerons (2, 3) du châssis
est divisé sensiblement derrière la paroi arrière (8) de la cabine de conduite en une partie supérieure (2/1, 3/1) distincte de longeron et une partie inférieure (2/2, 3/2) distincte de longeron et
à l'extrémité arrière d'un segment avant, séparé (2/3, 3/3) du longeron, il est prévu une fourche verticale (9) dont la partie supérieure de fourche (9/1) se poursuit par la partie supérieure de longeron (2/1, 3/1) et dont la partie inférieure de fourche (9/2) se poursuit par la partie inférieur de longeron (2/2 ou 3/2) du segment de longeron subdivisé, et est reliée à la partie de fourche correspondante (9/1, 9/2) de la fourche verticale (9) par des liaisons à vis ou à rivet,
en ce qu'en outre, la partie inférieure de longeron (2/2, 3/2) du segment de longeron subdivisée :
a) n'arrive que jusque devant le premier essieu arrière (12) et y est reliée par un organe de liaison (13, 14), d'un côté, s'étendant essentiellement dans la direction verticale, à la partie de longeron (2/1 ou 3/1) supérieure, correspondante et,
b) dans un plan vertical passant par la partie supérieure de longeron (2/1 ou 3/1), en étant décalée suffisamment de celle-ci vers le bas pour qu'entre les deux parties de longeron (2/1, 2/2 ou 31/1, 3/2), on puisse loger une roue de secours (19)
c) au moins dans la zone du logement de la roue de secours (19), ce segment est parallèle à la partie supérieure de longeron (2/1, 3/1)
et en ce que l'organe de liaison vertical (13, 14) est également réalisé comme organe de branchement pour une partie arrière de châssis/cadre (15) ou des parties de celles-ci et
- la roue de secours (19) est portée par au moins une console (20 ou 21),
- fixée à l'une des parties de longeron (2/1, 2/2 ou 3/1, 3/2) latéralement en saillie et
- avec des installations pour faciliter le montage et le démontage de la roue de secours (19) ainsi qu'un chariot pour introduire ou sortir transversalement, des organes de levage, d'abaissement et de basculement.

2. Camion selon la revendication 1,
caractérisé en ce que
la fourche (9) est prévue à l'extrémité arrière d'un segment avant de longeron (2/3, 3/3) qui, dans la zone en dessous de la cabine de conduite (5) et du groupe d'entraînement (4) se trouve à un niveau (H4) plus faible que le niveau (H5) de la partie supérieure de longeron (2/1, 3/1), en étant abaissé à environ 0,6-0,9 H5.

3. Camion selon l'une ou plusieurs des revendications précédentes,
caractérisé en ce que
les deux parties (2/1, 2/2 ou 3/1, 3/2) de chaque longeron de cadre (2, 3) s'étendent vers l'arrière jusque devant le premier essieu arrière (12) en y étant reliées par un organe de liaison (14) auquel est fixée de manière adaptée la partie arrière de châssis/cadre.

4. Camion selon l'une ou plusieurs des revendications 1 à 3,
caractérisé en ce que
la partie supérieure (2/1, 3/1) de chaque longeron de cadre (2, 3) s'étend au-delà du dispositif à essieu arrière et la partie inférieure (2/2, 3/2) de longeron qui se termine en amont du premier essieu arrière (12) est reliée à la partie supérieure de longeron (2/1, 3/1) par un panneau de palier (13) formant un organe de liaison sur lequel sont articulés les organes de suspension de l'essieu arrière à l'intérieur de la partie arrière du châssis.

5. Camion selon l'une ou plusieurs des revendications 1 à 4,
caractérisé en ce que
les deux parties (2/1, 2/2 ou 3/1, 3/2) d'un longeron de câble (2, 3) sont reliées dans la zone de chevauchement également par au moins une entretoise de rigidification.
